# EUROPÄISCHE PATENTSCHRIFT

(11) **EP 1 116 173 B1**
(45) Veröffentlichungstag und Bekanntmachung des Hinweises auf die Patenterteilung: **01.03.2006**
(21) Anmeldenummer: 00960312.7
(22) Anmeldetag: 21.07.2000
(51) Int. Cl.: G06K 19/07, G01C 21/26

(54) **NAVIGATIONSGERÄT**
NAVIGATION DEVICE
APPAREIL DE NAVIGATION

(30) Priorität: 24.07.1999 DE 19934837
(43) Veröffentlichungstag der Anmeldung: 18.07.2001
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: PCT/DE2000/002416
(87) Internationale Veröffentlichungsnummer: WO 2001/008086

(56) Entgegenhaltungen:
- EP-A- 0 610 025
- EP-A- 0 684 592
- DE-A- 4 340 868
- DE-A- 19 542 262
- DE-A- 19 643 454
- DE-A- 19 739 094
- DE-A- 19 746 597
- US-A- 5 619 396

## Beschreibung

### Stand der Technik

Die Erfindung geht von einem Navigationsgerät mit einem Adapterkartenleser nach der Gattung des unabhängigen Patentanspruchs aus.

Aus dem Prospekt "Programm '97 Sound und Fahrvergnügen pur. Mobile Kommunikation von Blaupunkt" der Firma Blaupunkt Werke GmbH, Hildesheim sind Navigationsgeräte mit Chipkartenleser in Form von Autoradios mit Chipkartenleser und Navigationskomponente, beispielsweise als Geräte des Typs "New York RDM 127" oder "Bremen RCM 127", bekannt. Die Chipkarte dient bei den genannten Geräte dem Diebstahlschutz. So ist auf der Chipkarte eine Information, beispielsweise ein Code, gespeichert, wobei ein Gerät erst dann betreibbar ist, wenn von einer eingelegten Chipkarte ein als Zugangsberechtigung akzeptierter Code eingelesen worden ist.

Weiter ist aus dem Prospekt "Der Pluspunkt im Auto. Mobile Kommunikation 1999." der Firma Blaupunkt Werke GmbH, Hildesheim ein Autoradiogerät mit Chipkartenleser, und mit integriertem Funkgerät, nämlich einem GSM-Mobilfunktelefon", und darüber hinaus mit Telematik-Funktionalitäten bekannt. Bei diesem Gerät ist der Chipkartenleser einerseits zur Aufnahme der oben beschriebenen sogenannten Key-Card, darüber hinaus aber auch zur Aufnahme einer sogenannten SIM-Karte, die bei GSM-Mobiltelefonen zur Identifizierung eines Mobilfunkteilnehmers dient, vorgesehen. Im Rahmen eines Telefonats empfangene Sprechfunksignale werden hier über die zur Rundfunkwiedergabe vorgesehenen Lautsprecher wiedergegeben, die Aufnahme von Sprachsignalen erfolgt über an das Gerät angeschlossenes Mikrofon. Über das Mobiltelefonmodul sind beispielsweise Meldungen über Verkehrsstauungen oder Routenvorschläge, beispielsweise zur Stauumfahrung, bei einem Diensteanbieter abrufbar.

EP-A-610 025 offenbart eine PCMCIA-Karte mit PCMCIA-Standardanschluss, die mit einer Schaltkreiskarte verbunden ist, die beispielsweise ein Funkmodem zur Kommunikation mit einem zellularen Kommunikationsnetz umfassen kann.

US-A-5 619 396 offenbart eine modulare PCMCIA-Karte, bei der ein Basisteil mechanisch und elektrisch zur Bildung einer PCMCIA-Karte des Typs III mit einem Zusatzteil verbunden ist, das ein Modem, einen Pager und/oder eine Infrarotschnittstelle umfassen kann.

EP-A-684 592 offenbart ein elektronisches Notizbuch mit einer Chipkarten-Schnittstelle und einer Funkschnittstelle. Das Gerät kann zur drahtlosen, insbesondere Funk- oder Infrarot-Übertragung eines Navigationsziels an ein Fahrzeugnavigationssystem verwendet werden.

DE-A-196 43 454 offenbart die Möglichkeit der Übertragung aktueller Verkehrsinformationen in ein Fahrzeugnavigationssystem über eine Mobilfunkverbindung.

DE-A-197 46 597 A1 offenbart ein Autoradio mit integriertem Navigationssystem mit interner Kartendatenbasis, wobei über ein angeschlossenes oder integriertes Mobiltelefon die Kartendatenbasis des Navigationssystems aktualisierbar ist.

### Vorteile der Erfindung

Das erfindungsgemäße Navigationsgerät mit den Merkmalen des unabhängigen Patentanspruchs hat den Vorteil, daß ein separates Sprechfunkgerät, beispielsweise ein GSM-Mobilfunktelefon, auf einfache Weise an ein bestehendes Navigationsgerät anschließbar ist, so daß dessen Informationen über Funk aktualisiert werden können. Insbesondere können die im Gerät gespeicherten, einer Navigation zugrunde gelegten, Karteninformationen, beispielsweise durch neu hinzukommende Verkehrswege, durch Dauerbaustellen oder beispielsweise geänderte Einbahnstrafienregelungen aktualisiert werden.

Weiter ist es aber auch vorstellbar, eine Off-Board-Navigation derart durchzuführen, daß Zieleingabe und/oder Routenberechnung außerhalb des Fahrzeugs getätigt und anschließend zur Zielführung an das Fahrzeugnavigationsgerät übertragen werden. Dies ist insbesondere im Zusammenhang mit dem Thema Flottenmanagement oder beispielsweise für Kurierdienste von Interesse.

Insbesondere ist es von Vorteil, daß erfindungsgemäß an ein bereits bestehendes Navigationsgerät ohne dessen Ausbau, ohne nachträgliche Anpassungen des Geräts und ohne aufwendige Kabelverlegung ein Funkgerät anschließbar ist. Insbesondere die Nachrüstung eines bestehenden Navigationsgeräts wird damit besonders vereinfacht.

Darüber hinaus steht das Funkgerät, im Gegensatz zu bekannten Lösungen mit integriertem Funkgerätemodul, bei Verlassen des Fahrzeugs weiterhin als separat mitführbares Funkgerät zur Verfügung. Weiter ist auch ein erfindungsgemäßes Navigationsgerät gegenüber Lösungen mit integriertem Funkgerätemodul deutlich kostengünstiger zu realisieren.

### Zeichnungen

Ausführungsbeispiele der Erfindung sind in den Figuren dargestellt und werden nachfolgend näher erläutert.

Es zeigen
Figur 1 ein Blockschaltbild eines erfindungsgemäßen Navigationsgeräts,
Figur 2 ein zur Durchführung der Erfindung angepaßtes Funkgerät am Beispiel eines GSM-Mobiltelfons und
Figur 3 eine Adapterkarte.

### Beschreibung der Ausführungsbeispiele

Das erfindungsgemäße Navigationsgerät 10 umfaßt eine zentrale Gerätesteuerung 20 zur Steuerung der geräteinternen Abläufe und zur Steuerung der Komponenten des Geräts. Die Steuerung umfaßt dazu in an sich bekannter Weise einen Speicher, in dem ein Betriebsprogramm abgelegt ist, sowie einen Prozessor zur Abarbeitung des Betriebsprogramms.

An die Steuerung 20 des Navigationsgeräts sind bei dem in der Figur dargestellten Ausführungsbeispiel Mittel 30 zur Bestimmung einer aktuellen Position des Fahrzeugs, in dem das Navigationsgerät betrieben wird, und/oder zur Bestimmung dessen Bewegungszustand und Ausrichtung bezüglich der Himmelsrichtungen angeschlossen. Im einzelnen handelt es sich dabei beispielsweise um einen Geschwindigkeitsmesser, einen Drehratensensor zur Bestimmung der Bewegungsrichtung oder Ausrichtung des Fahrzeugs und einen Empfänger zum vorzugsweisen Empfang von zur Positionsbestimmung bestimmten Satellitensignalen des GPS-Systems.

Weiter ist an die Steuerung 20 ein Speicher 60 für Karteninformationen angeschlossen, auf deren Grundlage ein als Teil der Steuerung realisierter Navigationsrechner ausgehend von einem aktuellen Fahrzeugstandort zu einem benutzerdefinierten Zielort eine Fahrtroute berechnet.

Zur Vorgabe des Zielorts für einen Zielführungsvorgang, aber auch zur Bedienung weiterer Funktionen des Navigationsgeräts 10, ist an die Steuerung 20 eine Bedieneinheit 40 mit Bedienelementen 45, beispielsweise in Form von Drucktasten, angeschlossen, über die beispielsweise der Ortsname eines Navigationsziels buchstabenweise und/oder durch Auswahl aus einer Liste eingebbar ist.

Zur Zielführung des Benutzers, also zur Leitung des Fahrzeugführers entlang der berechneten Fahrtroute vom aktuellen Standort zum Zielort mittels Fahrtanweisungen verfügt das Navigationsgerät 10 über eine an die Steuerung 20 angeschlossene Ausgabeeinheit 50 zur optischen und/oder akustischen Ausgabe der Fahrtanweisungen.

Schließlich verfügt das Navigationsgerät 10 erfindungsgemäß über einen, vorzugsweise mit der Steuerung 20 verbundenen, Adapterkartenleser 70 mit einem Kartenschacht 45, in den eine Adapterkarte, beispielsweise in Form einer Chipkarte nach dem ISO 7816-Standard einführbar ist.

Der Adapterkartenleser 70 verfügt über eine Schnittstelle zur Kontaktierung einer in den Kartenschacht 75 eingelegten Adapterkarte. Diese ist im einfachsten Fall in Form elektrischer Gegenkontakte ausgebildet, die Kontaktflächen einer in den Kartenschacht eingebrachten Adapter- oder Chipkarte elektrisch kontaktieren. Alternativ kann jedoch auch eine berührungslose und damit weniger verschleißanfällige Kontaktierung der Adapterkarte vorgesehen sein. Insbesondere kann der Adapterkartenleser, eine entsprechende erste Schnittstelle der Adapterkarte vorausgesetzt, induktiv oder kapazitiv mit der Schnittstelle der Adapterkarte in Wechselwirkung treten.

Die aus der Adapterkarte ausgelesenen Informationen können durch die Steuerung 20 zur Ergänzung und/oder Aktualisierung der im Speicher 60 abgelegten Karteninformationen verwertet werden.

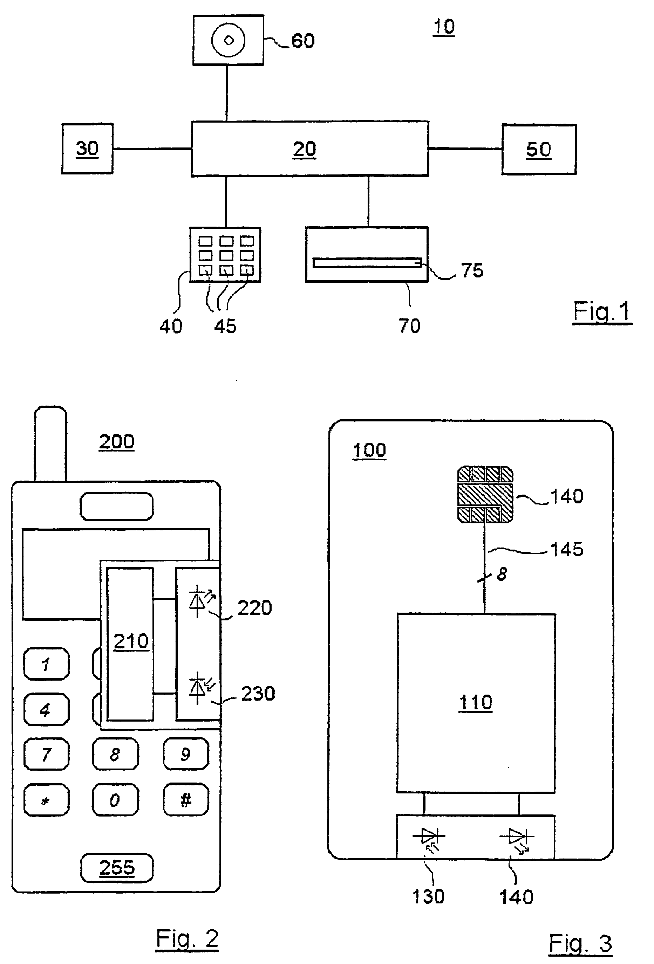

Bei dem in Figur 2 schematisch dargestellten Funkgerät handelt es sich beim vorliegenden Ausführungsbeispiel ohne Beschränkung der Allgemeinheit um ein GSM-Mobiltelefon.

Neben den bei solchen Geräten üblicherweise vorhandenen Komponenten beinhaltet dieses erfindungsgemäß eine zweite Sendeeinrichtung 220 zur Übertragung eines aus einem empfangenen Funksignal abgeleiteten Signals an eine externe Einheit, im vorliegenden Fall ein erfindungsgemäßes Navigationsgerät 10. Vorzugsweise werden die empfangenen Funksignale einer zweiten Codierschaltung 210 zugeführt, die die empfangenen Signale in ein Sendesignal, vorzugsweise in Form einer Puls Code Modulation (PCM), umsetzt. Das die empfangenen Funksignale enthaltende PCM-Signal wird über die Sendeeinrichtung 220, beispielsweise einen optischen Sender, im vorliegenden Fall eine Infrarot-Sendediode, abgestrahlt.

Weiterhin weist das Sprechfunkgerät gemäß einer besonders vorteilhaften Ausführungsform eine zweite Empfangseinrichtung 230 auf, über die von einem externen Gerät gesendete Signale an das Mobiltelefon 200 übertragbar sind. Vorzugsweise handelt es sich bei der zweiten Empfangseinrichtung 230 um ein, vorzugsweise im infraroten Bereich sensibilisiertes Element, beispielsweise um eine Infrarot-Fotodiode.

Die von der zweiten Empfangseinrichtung 230 aufgenommenen Signale werden zur Decodierung und Umsetzung in ein Sendesignal der zweiten Codierschaltung 210 zugeführt, die auch die Funktion einer Decodierschaltung umfaßt. Dort wird das über die zweite Empfangseinrichtung empfangene Infrarot-PCM-Signal decodiert und anstelle eines vom geräteeigenen Mikrofon 255 aufgenommenen Sprachsignals dem Sender des Mobiltelefons zugeführt.

Statt dessen kann es jedoch auch vorgesehen sein, daß das empfangene Infrarot-PCM-Signal durch die Codierschaltung 210 unbeeinflußt direkt dem Sender des Mobiltelefons zugeführt und dort in geeigneter Weise in ein Mobilfunk-Sendesignal umgesetzt wird.

Bei der in Figur 3 dargestellten Adapterkarte 100 handelt es sich gemäß vorliegendem Ausführungsbeispiel, ohne Beschränkung der Allgemeinheit, um eine Chipkarte nach dem Standard ISO 7816, die in jedem Fall mittels eines Chipkartenlesers auswertbar/beschreibbar ist.

Diese weist eine erste Schnittstelle zum Datenaustausch mit dem Kartenleser 70 des Navigationsgeräts 10 in Form eines an ihrer Oberseite angeordneten Kontaktfeldes 140 mit elektrischen Kontakten auf, das über einen Datenbus 145 mit einem in den Kartenkörper eingebetteten Mikrochip 110 verbunden ist.

Bei einer alternativen Ausführungsform der Adapterkarte kann es demgegenüber vorgesehen sein, daß statt eines Kontaktfeldes der Datenaustausch zwischen Adapterkarte und Chipkartenleser berührungslos, also beispielsweise induktiv oder kapazitiv erfolgt, wozu sowohl Adapterkarte, als auch Chipkartenleser über die erforderlichen Mitte, wie induktive oder kapazitive Koppler verfügen.

Der Mikrochip 110 ist seinerseits wiederum mit einer ersten Sendeeinrichtung 120 und einer ersten Empfangseinrichtung 130 verbunden. Erste Sendeeinrichtung 120 und erste Empfangseinrichtung 130 bilden eine zweite, vorzugsweise optische, Schnittstelle, beispielsweise für Infrarot-PCM-Signale.

Die beschriebene Adapterkarte 100 ist dazu ausgelegt, eine Verbindung zwischen einem beschriebenen Funkgerät 200 und einem ebenfalls beschriebenen Navigationsgerät 10 herzustellen, so daß mittels des Funkgeräts 200 empfangene Funksignale durch das Navigationsgerät 10 verarbeitbar sind. Weiter ist die Adapterkarte 100 vorzugsweise auch dazu ausgelegt, durch das Navigationsgerät erzeugte Signale, wie beispielsweise ein Notrufsignal in Verbindung mit einem die aktuelle Fahrzeugposition enthaltenden Signal an das Funkgerät zum Umsetzen in Funksignale und zum Senden zu übermitteln.

Dazu sind die Umsetzungsmittel 110 der Chipkarte als erste Codierschaltung 110 in Form eines Codier-/Decodierchips ausgeführt, die ein mittels der ersten Empfangseinheit 130 empfangenes Infrarot-PCM-Signal in ein für das Navigationsgerät verständliches Format umsetzen, das über das Kontaktfeld 140 abnehmbar ist. Umgekehrt wird ein der ersten Codierschaltung 110 über die Kontakte 140 zugeführtes Signal des Navigationsgeräts 10 in ein PCM-Signal umgesetzt und über die erste Sendeeinrichtung 120 als Infrarot-PCM-Signal abgestrahlt.

Die Codierschaltung ist vorzugsweise in Form eines Mikroprozessors mit dazugehörigem Betriebsprogramm ausgeführt. Die Energieversorgung der Codierschaltung 110 wie auch der ersten Sende- und Empfangseinrichtung 120, 130 der Chipkarte 100 erfolgt vorzugsweise über den Datenbus 145 und die Kontakte 140 der Chipkarte vom Chipkartenleser 40 des Autoradios 10 aus.

Bei einer alternativen Ausführungsform sowohl des Funkgeräts 200, als auch der Adapterkarte 100 kann statt einer Infrarotschnittstelle als zweiter Schnittstelle zur Datenübertragung zwischen Sprechfunkgerät und Adapterkarte auch eine anderweitige drahtlose Schnittstelle, wie beispielsweise eine Funkschnittstelle eingesetzt werden. Prinzipiell ist jedoch auch eine Kabelverbindung zwischen Adapterkarte und Funkgerät denkbar.

Bei den mittels des Funkgeräts 200, beim vorliegenden Ausführungsbeispiel also des GSM-Mobiltelefons, empfangenen und zur Weiterleitung an das Navigationsgerät 10 bestimmten Informationen handelt es sich beispielsweise um
- Informationen zur Aktualisierung und/oder Ergänzung der im Speicher 60 des Navigationsgeräts enthaltenen Kartendaten, wie beispielsweise neue Verkehrswege, geänderte Verkehrsregelungen auf bestehenden Verkehrswegen, länger bestehende Dauerbaustellen oder geänderte Geschwindigkeitsbeschränkungen auf Streckenabschnitten,
- Informationen über Verkehrsstauungen, kurzfristige Straßensperrungen oder beispielsweise auch Warnungen vor auf bestimmten Streckenabschnitten, oder
- Routenvorschläge im Falle einer Off-Board-Berechnung einer Fahrtroute von einem Start- zu einem Zielort oder Teilroutenvorschläge zur Umfahrung von Verkehrsstörungen unter Berücksichtigung aktueller Verkehrsinformationen.

Diese und ähnliche Informationen werden, im Falle eines GSM-Mobiltelefons als Funkgerät, vorzugsweise als sogenannte SMS, alternativ aber auch innerhalb des gewöhnlich für Sprachsignale verfügbaren Übertragungskanals, je nach benötigter Übertragungskapazität, von einem vom Benutzer wählbaren Diensteanbieter nach Herstellung einer Verbindung zum Diensteanbieter an das Mobiltelefon oder Funkgerät, und von dort über die Adapterkarte 100 an das Navigationsgerät 10 übertragen.

Zur Weiterleitung an das Funkgerät 200 vom Navigationsgerät 10 erzeugte Informationen sind beispielsweise
- Signale zur Anwahl eines Diensteanbieters, insbesondere zur Herstellung einer Verbindung zwischen Diensteanbieter und Mobiltelefon zur Anforderung von Informationen, insbesondere eine aus dem Rufnummernspeicher des Navigationsgeräts ausgewählte Rufnummer eines Diensteanbieters,
- Notrufsignale, die beispielsweise im Falle eines Fahrzeugdefekts benutzerinitiiert oder im Falle eines Unfalls automatisch zusammen mit von Ortungsmitteln 30 des Navigationsgeräts erzeugten Informationen über den aktuellen Fahrzeugstandort an einen Hilfs- oder Rettungsdienst zu übermitteln sind, oder
- Die Anforderung einer Fahrtroutenberechnung bei einem Diensteanbieter unter Mitteilung von Informationen über eine aktuelle Fahrzeugposition, die mittels der Ortungsmittel 30 feststellbar ist, sowie eines benutzerdefinierten Fahrtziels.

Mittels des Mobiltelefons 200 empfangene Signale werden nach ihrer Demodulation in der zweiten Codierschaltung 210, also der Codierschaltung des Funkgeräts, in ein PCM-Signal umgesetzt und über die zweite Sendeeinheit 220, also die Sendeeinheit des Funkgeräts abgestrahlt. Bei geeigneter Ausrichtung des Funkgeräts 200 bzw. der zweiten Sendeeinheit 220 relativ zu der in den Chipkartenleser 70 des Navigationsgeräts 10 eingeschobenen Chipkarte 100 bzw. deren erster Empfangseinheit 130 werden die vom Funkgerät abgestrahlten Infrarot-PCM-Signale durch die erste Empfangseinheit 130 der Adapterkarte empfangen und an die erste Codierschaltung 110 der Adapterkarte 110 weitergeleitet. Dort werden die PCM-Signale in ein für das Navigationsgerät verständliches Format umgesetzt und über den Datenbus 145 und die Kontakte 140 der Adapterkarte dem Chipkartenleser 70 zugeführt, von wo das Signal durch die Steuerung 20 zur Aktualisierung und/oder Ergänzung des im Speicher 60 vorhandenen Datenbestandes übernommen wird.

Umgekehrt werden vom Navigationsgerät erzeugte Signale an den Chipkartenleser 70 und von dort über die Kontakte 140 der in den Chipkartenleser 70 eingelegten Adapterkarte 100 und deren Datenbus 145 der Codierschaltung 110 der Adapterkarte 100 zugeführt. In der Codierschaltung werden diese in ein PCM-Signal umgesetzt und über die erste Sendeeinrichtung 120 der Adapterkarte 100 in Form eines Infrarot-PCM-Signal abgestrahlt. Bei geeigneter Ausrichtung des Mobiltelefons 200 bzw. dessen zweiter Empfangseinrichtung 230 relativ zur ersten Sendeeinrichtung 120 der Adapterkarte 100 werden die Infrarot-PCM-Signale von der zweiten Empfangseinheit 230 des Funkgeräts aufgenommen und der zweiten Codierschaltung 210 des Funkgeräts 200 zugeführt. Dort werden sie in ein Sendesignal umgesetzt und schließlich dem Funksender des Funkgeräts zum Senden zugeführt.

## Patentansprüche

1. Navigationsgerät mit einem Adapterkartenleser (70)
**dadurch gekennzeichnet,**
**dass** das Navigationsgerät über eine Adapterkarte (100), verfügt die eine erste Schnittstelle (140) zur Kommunikation mit dem Adapterkartenleser (70) und eine zweite Schnittstelle (130) zur Kommunikation mit einem Funkgerät (200) aufweist, über die das Navigationsgerät mit dem Funkgerät (200) verbindbar oder verbunden ist.

2. Navigationsgerät nach Anspruch 1, **gekennzeichnet durch** einen Rufnummernspeicher
und eine Ausbildung des Adapterkartenlesers (70) zur Übertragung einer aus dem Rufnummernspeicher ausgewählten Rufnummer an das Funkgerät (200).

3. Navigationsgerät nach Anspruch 2, **dadurch gekennzeichnet, dass** auf einen Befehl des Benutzers oder in einer Notfallsituation, insbesondere im Falle eines Unfalls, automatisch eine vorgegebene Rufnummer aus dem Rufnummernspeicher ausgewählt und angewählt wird und nach Herstellung einer Verbindung mindestens eine Positionsinformation von Ortungsmitteln (30) des Navigationsgeräts (10) über die Verbindung gesendet werden.

## Claims

1. Navigation unit with an adapter card reader (70), **characterized**
**in that** the navigation unit has an adapter card (100) which has a first interface (140) for communicating with the adapter card reader (70) and a second interface (130) for communicating with a radio (200) which can be used or which is used to connect the navigation unit to the radio (200).

2. Navigation unit according to Claim 1, **characterized by** a telephone number store and a form of the adapter card reader (70) for transmitting a telephone number selected from the telephone number store to the radio (200).

3. Navigation unit according to Claim 2, **characterized in that** upon a command from the user or in an emergency situation, particularly in the case of an accident, a prescribed telephone number is automatically selected from the telephone number store and dialled, and after a connection has been set up at least one position information item from position-finding means (30) in the navigation unit (10) is transmitted via the connection.

## Revendications

1. Appareil de navigation muni d'un lecteur de carte d'interface (70),
**caractérisé en ce que**
l'appareil de navigation a une carte d'interface (100) comportant une première interface (140) pour communiquer avec le lecteur de carte d'interface (70), et une deuxième interface (130) pour communiquer avec un appareil radio (200) grâce à laquelle l'appareil de navigation peut être relié ou est relié à l'appareil radio (200).

2. Appareil de navigation selon la revendication 1,
**caractérisé en ce qu'**
il dispose d'une mémoire de numéros d'appel et
le lecteur de carte d'interface (70) est conçu pour transmettre à l'appareil radio (200) un numéro d'appel sélectionné dans la mémoire de numéros d'appel.

3. Appareil de navigation selon la revendication 2,
**caractérisé en ce que**
sur un ordre de l'utilisateur ou dans un cas d'urgence, en particulier en cas d'accident, un numéro d'appel prédéfini est automatiquement sélectionné dans la mémoire de numéros d'appel et est composé, et après qu'une communication a été établie, au moins une information de position est envoyée par des moyens de localisation (30) de l'appareil de navigation (10) par l'intermédiaire de la communication.
